# EUROPEAN PATENT SPECIFICATION

(11) **EP 3 995 818 B1**
(45) Date of publication and mention of the grant of the patent: **30.04.2025**
(21) Application number: 20206189.1
(22) Date of filing: 06.11.2020
(51) Int. Cl.: G01N 21/90

(54) **ARTICLE TREATMENT MACHINE HAVING AN INSPECTION SYSTEM**
ARTIKELBEHANDLUNGSMASCHINE MIT EINEM INSPEKTIONSSYSTEM
MACHINE DE TRAITEMENT D'ARTICLE COMPORTANT UN SYSTÈME D'INSPECTION

(43) Date of publication of application: 11.05.2022
(73) Proprietor: Sidel Participations, 76930 Octeville-sur-Mer (FR)
(72) Inventor: SONCINI, Michele, 43126 Parma (IT); DAZZI, Filippo, 43126 Parma (IT)
(74) Representative: Sidel Group

(56) References cited:
- KR-A- 20160 128 603
- US-A1- 2006 283 145
- COGNEX: "IN-SIGHT 2000 VISION SENSORS", 22 April 2021 (2021-04-22), XP055798034, Retrieved from the Internet <URL:https://esmvision.eu/cognex/wp-content/uploads/2018/09/Vision-Sensors-Product-Guide.pdf> [retrieved on 20210422]

## Description

### TECHNICAL FIELD

The present invention relates to an article treatment machine for the packaging of pourable food products having an inspection system for inspection of an inner environment of the article treatment machine.

### BACKGROUND ART

Pourable food products are known to be packaged into receptacles such as bottles within automatic article treatment machines, the receptacles being closed by means of respective closures after the packaging of the pourable food product within the receptacle.

Such article treatment machines comprise at least an isolation chamber separating an inner environment from an outer environment and one or more treatment apparatuses needed to package the pourable within the inner environment while the inner environment is kept under a controlled condition.

Typical known treatment apparatuses are e.g. filling apparatuses for filling the receptacles with the pourable food product, capping apparatuses for applying closures onto the filled receptacles, conveying apparatuses for conveying the receptacles or closures to be applied onto the receptacles, sterilization apparatuses for the sterilization of the receptacles or closures, blow molding apparatuses for the molding of receptacles from preforms and others.

Often it is necessary to monitor by visual inspection and/or by means of sensors associated to the varying treatment apparatuses the packaging process. This may include the inspection of the function of the treatment apparatuses and/or the receptacles and/or the closures. Visual inspection may e.g. occur by an operator inspecting the inner environment and the packaging process through an inspection window. Sensors may e.g. be adapted to detect defects of the receptacles or other possible problems associated to the filling process and may be associated to components of the treatment apparatuses and may be present in a significant number.

An inconvenience is seen in that the visual inspection is not possible for all areas within the inner environment.

Another inconvenience is considered in that the use of sensors results in an increase in the complexity of the operation of the article treatment apparatus, which becomes more and more significant the more sensors are required.

Thus, a desire is felt in the sector to provide means, which may allow to improve the known article treatment apparatuses.

KR 2016 0128603 A discloses an apparatus to inspect a bottle filling solution comprising: a carrying unit to continuously supply a bottle; a turret assembly to revolve the bottle received from the carrying unit; a rotation unit providing centrifugal force to a filling solution contained in the bottle being revolved by the turret assembly; an inspection module to inspect foreign matter mixed in the filling solution in the bottle; and a carry-out unit to transfer the bottle inspected by the inspection module to the outside.

US 2006/283145 A1 discloses a beverage bottling plant for filling bottles with a liquid beverage material having an inspection device for inspecting bottles. The inspection device is configured for inspecting closed containers such as bottles, jars or similar containers, with at least one camera, at least one illumination device and at least one system for image processing, with a housing which encloses at least a portion of the container conveyor line, at least one illumination device and at least one camera.

### DISCLOSURE OF INVENTION

It is therefore an object of the present invention to provide means to overcome, in a straightforward and low-cost manner, at least one of the aforementioned drawbacks.

In particular, it is therefore an object of the present invention to provide means so as to inspect areas of article treatment machines for the packaging of pourable food products, which are difficult to inspect.

Advantageously, it is also an object of the present invention to provide an article treatment machine for the packaging of pourable food products to overcome, in a straightforward and low-cost manner, at least one of the aforementioned drawbacks.

According to the present invention, there is provided an article treatment machine as claimed in claim 1.

Preferred non-limiting embodiments are claimed in the claims being directly or indirectly dependent on claim 1.

### BRIEF DESCRIPTION OF THE DRAWINGS

A non-limiting embodiment of the present invention will be described by way of example with reference to the accompanying drawings, in which:
Figure 1 is a schematic top view of an article treatment machine according to the present invention, having at least one inspection system, with parts removed for clarity;
Figure 2 is a perspective and schematic view of a detail of the article treatment machine of Figure 1, with parts removed for clarity;
Figure 3 is an exploded view of the inspection system according to the present invention, with parts removed for clarity;
Figures 4 and 5 are section views of details of the article treatment machine, with parts removed for clarity; and
Figure 6 is a perspective view of the inspection system, with parts removed for clarity.

### BEST MODES FOR CARRYING OUT THE INVENTION

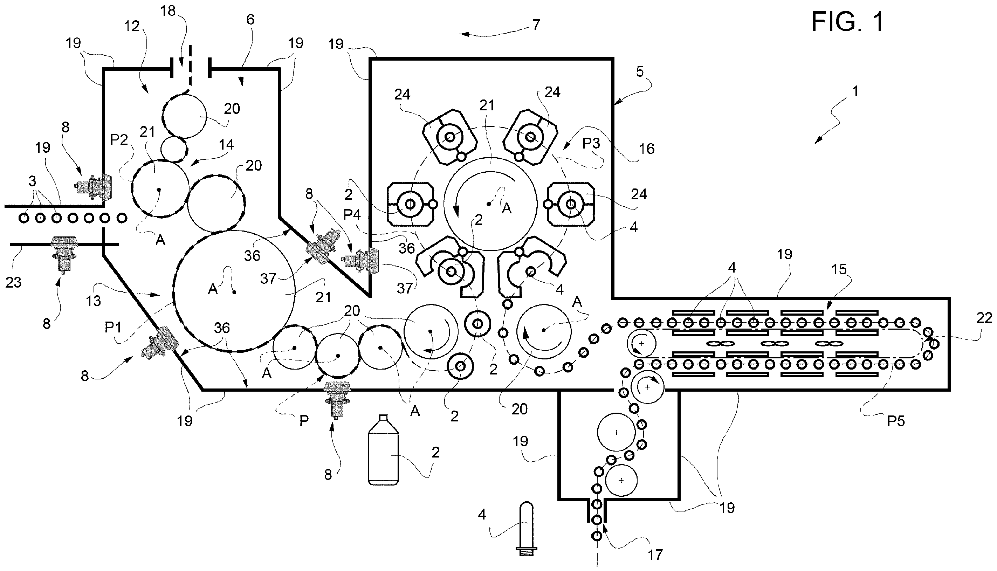

Number 1 in Figure 1 indicates as a whole an article treatment machine, in particular an automatic article treatment machine, for the packaging of pourable food products, such as carbonated liquids (e.g. sparkling water, soft drinks and beer), non-carbonated liquids (including still water, juices, teas, sport drinks, wine, milk, etc.), emulsions and beverages containing pulps.

In particular, article treatment machine 1 may be configured to treat articles such as:
- receptacles 2, e.g. bottles, jars, vessels, containers or the like, in particular being made of base components, like glass, paper or cardboard, plastics, aluminum, steel, and composites; and/or
- closures 3, e.g. crown corks, screw caps, sports caps, stoppers or similar, in particular produced from a variety of materials such as plastics and metal; and/or
- precursors 4, e.g. preforms, from which receptacles 2 are formed.

In more detail, article treatment machine 1 may comprise:
- an isolation chamber 5 separating an inner (sterile and/or aseptic and/or clean and/or ultraclean) environment 6 from an outer environment 7; and
- one or more treatment apparatuses configured to execute specific treatment steps on the articles within inner environment 6.

Advantageously, article treatment machine 1 also comprises one or more inspection systems 8 configured to inspect areas within inner environment 6 (e.g. portions of the treatment apparatuses and/or the articles (receptacles 2 and/or closures 3 and/or precursors 4)).

In particular, each inspection system 8 may be designed to inspect critical and/or difficult to reach areas within inner environment 6.

According to some possible non-limiting embodiments, inspection systems 8 could be configured to monitor one or more of the following: advancement of the articles, a filling process (i.e. the filling of receptacles 2 with the pourable product), a capping process (i.e. the application of closures 3 onto receptacles 2), a transfer process of the articles from a first portion of one treatment apparatus to a second portion of the treatment apparatus, a transfer process of the articles from one treatment apparatus to another treatment apparatus, transfer and/or advancement of filled receptacles 2 and the possible occurrence of a splashing of the pourable product from receptacles 2 and others.

In more detail and with particular reference to Figure 1, article treatment machine 1 may comprise one or more of the following treatment apparatuses:
- a conveying apparatus 12 configured to advance (a succession of) receptacles 2 along an advancement path P within inner environment 6 and/or isolation chamber 4; and/or
- a filling apparatus 13 at least partially arranged within inner environment 6 and configured to fill receptacles 2 with the pourable product during their advancement along at least a filling portion P1 of advancement path P; and/or
- a capping apparatus 14 at least partially arranged within inner environment 6 and configured to apply closures 3 onto receptacles 2 during their advancement along at least a capping portion P2 of advancement path P, in particular capping portion P2 being arranged downstream of filling portion P1 along advancement path P.

Furthermore, article treatment machine 1 may comprise a conditioning unit configured to control an ambient condition, such as temperature and/or humidity and/or sterility and/or cleanliness and/or an airflow (direction), within inner environment 6.

According to some possible non-limiting embodiments, article treatment machine 1 may also comprise one or more of additional treatment apparatuses such as:
- a pre-heating oven 15 at least partially arranged within isolation chamber 5 and configured to pre-heat precursors 4 within isolation chamber 5; and/or
- a molding apparatus 16 configured to mold receptacles 2 from precursors 4, and being in particular arranged downstream from pre-heating oven 15 and upstream from filling apparatus 13 along advancement path P.

Alternatively or in addition, article treatment apparatus 1 could also comprise a sterilization apparatus configured to sterilize receptacles 2, and could be in particular arranged upstream of filling apparatus 13 along advancement path P.

In more detail, isolation chamber 4 may comprise an inlet 17 and an outlet 18 designed to allow for respectively feeding and discharging of the articles to and from inner environment 6.

In the specific case shown, inlet 17 is designed to allow for the feeding of precursors 4 into inner environment 6 and outlet 18 is designed to allow for the discharging of filled and capped receptacles 2.

According to a possible embodiment not shown, inlet 17 could be designed to allow for the feeding of (empty) receptacles 2 into inner environment 6 and outlet 18 could be designed to allow for the discharging of filled and capped receptacles 2.

Furthermore, isolation chamber 4 may comprise a plurality of walls 19 delimiting inner environment 6, in particular delimiting inner environment 6 from six faces, and carrying inlet 17 and outlet 18.

In particular, some walls 19 could have (substantially) a horizontal orientation and some walls 19 could have a (substantially) vertical orientation.

In more detail, conveying apparatus 12 may be configured to advance precursors 4 from inlet 17 to an intermediate station and receptacles 2 from the intermediate station to outlet 18.

According to some possible alternative embodiments, conveying apparatus 12 could be designed to advance receptacles 2 from inlet 17 to outlet 18, in particular conveying apparatus 12 could be configured to receive receptacles 2 at inlet 17 and to discharge receptacles 2 at outlet 18. According to such an alternative embodiment, conveying apparatus 12 could be configured to advance receptacles 2 from inlet 17 to filling apparatus 13, from filling apparatus 13 to capping apparatus 14 and from capping apparatus 14 to outlet 18.

In further detail, conveying apparatus 12 may comprise one or more star wheels 20, in the example shown three, and/or one or more conveying carousels 21, each star wheel 20 and each conveying carousel 21 being rotatable around a respective rotation axis A, in particular having a vertical orientation, and each one being configured to advance receptacles 2 along a respective (arc-shaped) portion of advancement path P.

According to some possible non-limiting embodiments, one conveying carousel 21 is associated to filling apparatus 13 and defines (at least partially) filling portion P1 and/or one conveying carousel 21 is associated to capping apparatus 14 and defines (at least partially) capping portion P2 and/or one conveying carousel 21 is associated to molding apparatus 16 and is configured to advance precursors 4 along a respective molding portion P3 of advancement path P and receptacles 2 along a transfer portion P4 of advancement path P.

Moreover, conveying apparatus 12 could also comprise a conveyor 22 for advancing precursors 4 along a pre-heating portion P5 of advancement path P.

According to some preferred non-limiting embodiments, at least one star wheel 20 is arranged upstream of each conveying carousel 21 and at least one star wheel 20 is arranged downstream of each conveying carousel 21 along advancement path P.

In more detail, filling apparatus 13 may comprise a plurality of filling units (not shown and known as such) arranged within inner environment 6 and configured to fill receptacles 2 with the pourable product during advancement of receptacles 2 along filling portion P1.

In particular, the filling units are arranged on the respective conveying carousel 21, in particular the filling units being equally spaced about the respective rotation axis A.

Preferentially, each filling unit comprises a retaining element, such as a gripping element or a pedestal, designed to retain one respective receptacle 2 during advancement along the filling portion P1 and a filling valve designed to selectively direct the pourable product into the respective receptacle 2 during its advancement along filling portion P1.

In further detail, each capping apparatus 14 may comprise a plurality of capping units (known as such) configured to retain receptacles 2 and to apply (and fasten) the closures on receptacles 2 during their advancement along capping portion P2.

Preferentially, the capping units are arranged on the respective conveying carousel 21, and in particular are equally spaced about the respective rotation axis A.

In even further detail, each capping unit may comprise a respective retaining element, such as a gripping element or a pedestal, configured to retain one respective receptacle 2 during advancement along the capping portion P2 and a respective capping head configured to apply and to fasten one respective closure on the respective receptacle 2.

Moreover, each capping apparatus 14 may comprise a feed unit configured to feed closures 3 to the capping units. Additionally, capping apparatus 14 may also comprise a sterilization unit for sterilizing closures 3 and designed to direct sterilized closures 3 to the feed unit.

In more detail, the feed unit may comprise a feed channel 22 (delimiting a portion of inner environment 6) through which closures 3 are fed to the capping units.

Furthermore, molding apparatus 16 may comprise a plurality of molding units 24 arranged within inner environment 6 and configured to mold receptacles 2 from precursors 4 during advancement of precursors 4 along molding portion P3.

In particular, molding units 24 may be arranged on the respective conveying carousel 21, in particular being equally spaced about the respective rotation axis A.

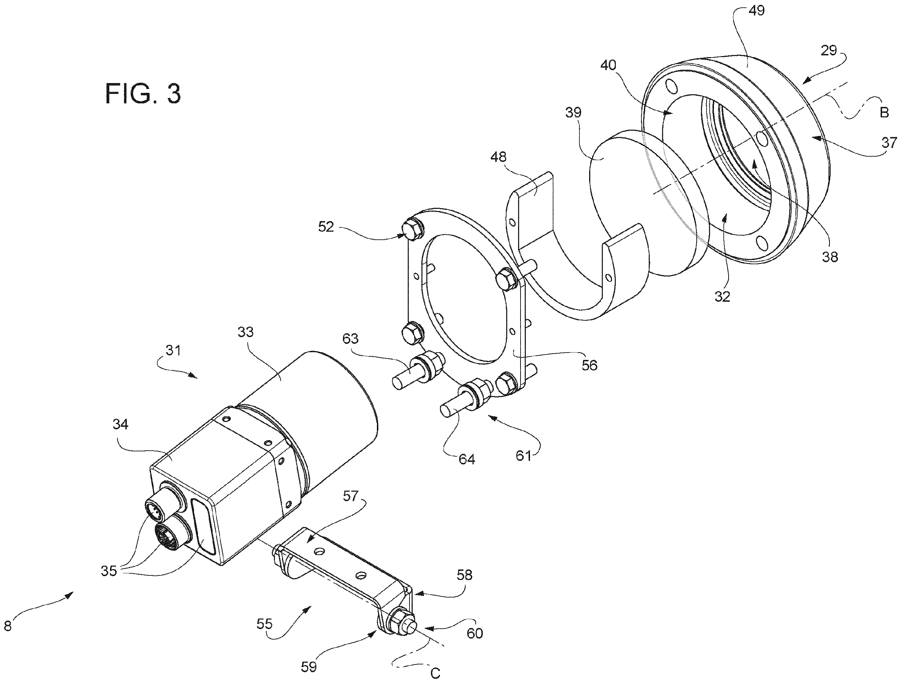

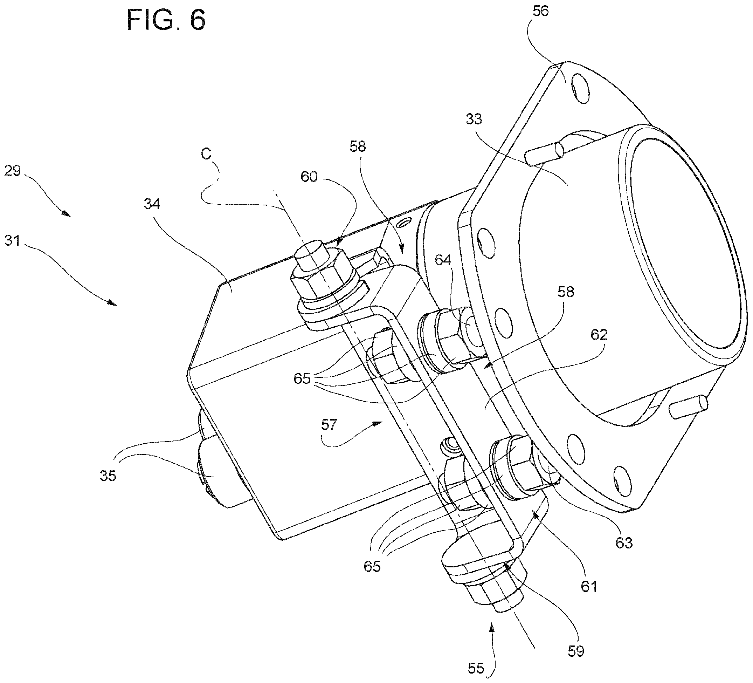

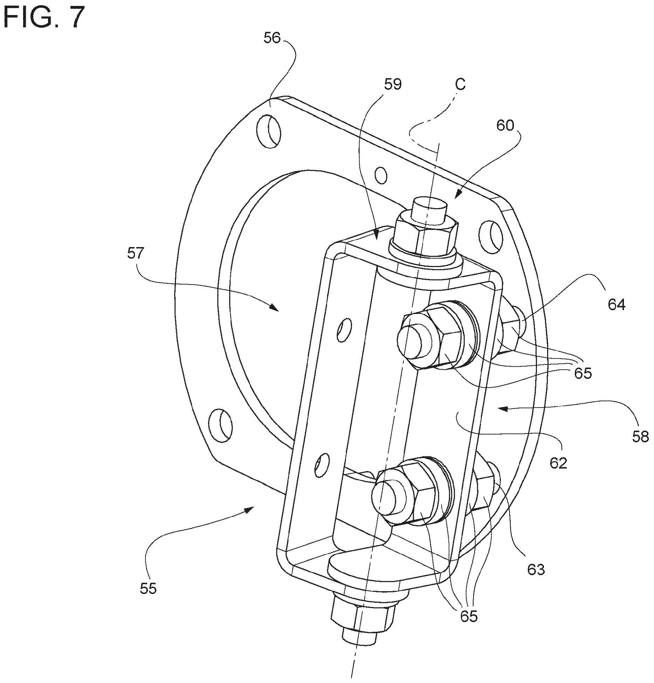

With particular reference to Figures 1 to 7, each inspection system 8 comprises at least a separation housing 29 designed to be mounted and/or mounted to isolation chamber 5, in particular a respective wall portion 30 of walls 19, and a camera 31, in particular a digital camera, even more particular a digital video camera.

In particular, each separation housing 29 is designed to protrude and/or protrudes into inner environment 6 and comprises a cavity 32, which is designed to be and/or is fluidically separated from inner environment 6. Even more particular, cavity 32 may be designed to be and/or is in fluidic connection with outer environment 7.

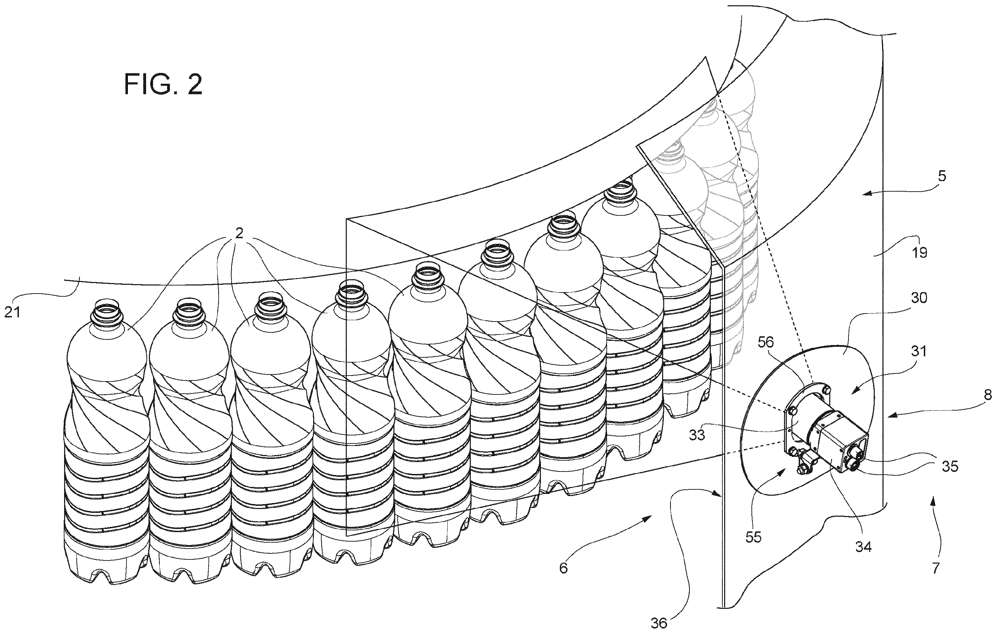

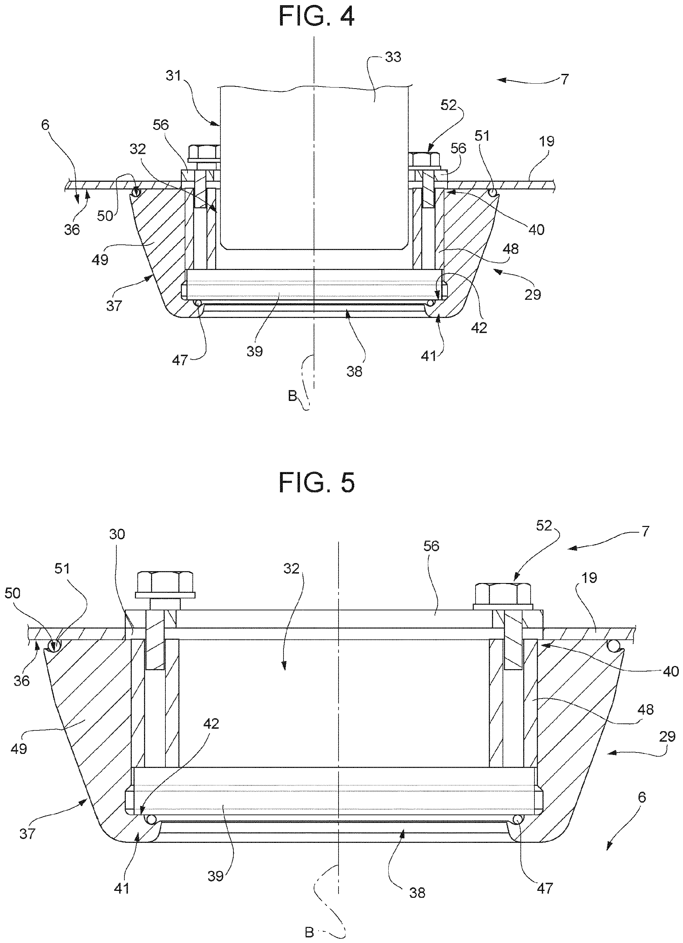

Advantageously and with particular reference to Figures 2 and 4, each camera 31 is at least partially arranged within the respective cavity 32.

In this way the inspection system 8 can be positioned also to inspect narrow spaces or tight spots of the inner environment 6, while having a good field of view of the camera 31 with respect to the area to be inspected or monitored.

In more detail, each camera 31 comprises a lens portion 33 having an optical system, in particular the optical system having at least one lens.

Additionally, each camera 31 may comprise a main portion 34 carrying the respective lens portion 33 and having at least an (electronic) image pick-up device for acquiring images. In particular, the image pick-up device is designed to receive light propagating through the optical system.

Furthermore, each camera 31 may comprise one or more connection interfaces 35 so as to connect camera 31 to external sources such as electrical supplies, computing devices, image editing devices, other electronic devices, etc.

According to some possible non-limiting embodiments, each camera 31 may comprise an image analyzing unit for analyzing the images acquired, in use, by camera 31, in particular the respective image pick up device.

Alternatively or in addition, each camera 31 may be connectable to an external image analyzing unit.

In more detail, at least each lens portion 33 may be partially positioned within the respective cavity 32.

In this way the separating housing 29 can be optimally exploited to improve the field of view of the camera 31 with respect to the area to be monitored or inspected.

In more detail and with particular reference to Figures 1, 2, 4 and 5, each separation housing 29 may be designed to be mounted and/or may be mounted to an inner surface 36 of isolation chamber 5, in particular inner surface 36 facing and/or delimiting inner environment 6.

In even more detail, each separation housing 29 may comprise a frame 37, in particular an annular frame 37, having an opening 38 and a transparent wall 39, in particular a transparent glass wall, covering opening 38. In particular, transparent wall 39 may have a circular shape.

In particular, each frame 37 and the respective transparent wall 39 delimit the respective cavity 32 and are designed to fluidically separate and/or fluidically separate cavity 32 from inner environment 6.

Moreover, each camera 31, in particular the respective lens portion 33, even more particular the respective optical system, may be designed to inspect a respective area within inner environment 6 through transparent wall 39.

In more detail, each frame 37 may be designed to protrude and/or may protrude from the respective wall portion 30 and/or inner surface 36 into inner environment 6.

Preferentially, each frame 37 may at least partially delimit, in particular at least laterally delimit, the respective cavity 32.

In further detail, each frame 37 may extend along a (central and/or longitudinal) axis B. Preferentially, each frame 37 has an annular, in particular circular, cross-section with respect to a cross-section plane being perpendicular to axis B.

Preferentially, each frame 37 may comprise a further opening 40 opposed to the respective opening 38 and allowing to at least partially place the respective camera 31 into the respective cavity 32.

Moreover, each frame 37 may carry the respective opening 38 and the respective opening 40 at respectively a first end and a second end of frame 37, the first end and the second end being opposed to one another with respect to axis B.

In more detail, each frame 37 may comprise a rim 41, in particular arranged at the respective first end, delimiting the respective opening 38. In particular, the respective transparent wall 39 abuts against rim 41.

In even more detail, each rim 41 may comprise an abutment surface 42 and the respective transparent wall 39 may engage abutment surface 42.

According to some possible non-limiting embodiments, each rim 41 may comprise an annular groove and an annular gasket 47 arranged within the annular groove. Preferentially, each transparent wall 39 is pressed against the respective gasket 46, in particular for guaranteeing the sealing of the respective cavity 32 from inner environment 6. Preferentially, each gasket 46 comprises and/or defines at least a portion of the respective abutment surface 42.

In this way it is improved the operative compactness of the mechanical configuration of the components required for mounting the camera 31 to the isolation chamber 5, while avoiding the risk of occurring of a contamination of the inner environment 6 due to this mechanical configuration and/or the risk of damaging the camera 31 by some material present within the inner environment 6.

Preferentially, each separation housing 29 comprises a spacer 48 designed to be arranged and/or being arranged between the respective transparent wall 39 and the respective wall portion 30. In particular, each spacer 48 is designed to exert and/or exerts a pressing force onto the respective transparent wall 39, in particular so as to press the respective transparent wall 39 against the respective rim 41, in particular against at least the respective gasket 47.

In particular, each spacer 48 may have an arc-shaped profile.

In more detail, each spacer 48 may contact the transparent wall 39 from a first terminal end and the respective wall portion from a second terminal end opposed to the first terminal end.

The use of the spacer 48 interposed between the transparent wall 39 and the wall portion allows to minimize the number of mechanical component for mounting the camera 31 to the isolation chamber 5.

With particular reference to Figures 4 and 5, each frame 37 may comprise a side wall 49 carrying the respective rim 41 (at a first end of side wall 49), in particular the respective rim 41 may radially protrude inwards from the respective side wall 49.

Moreover, side wall 49 delimits the respective opening 40 at a second end of side wall 49 opposed to the respective first end.

According to some preferred non-limiting embodiments, each frame 37, in particular the respective side wall 49, may comprise an annular groove 50 and an annular gasket 51 designed to contact and/or contacting the respective wall portion 30. In particular, each gasket 51 seals the respective cavity 32 from inner environment 6 (in particular at the interface between the respective frame 37 and the respective wall portion 30).

According to some preferred non-limiting embodiments, each inspection system 8 also comprises a first fixing device 52 designed to fix the respective separation housing 29 to isolation chamber 5, in particular to the respective wall portion 30.

With particular reference to Figures 2, 3, 6 and 7, each inspection system 8 may comprise a control device 55 coupled to the respective camera 31 and configured to control the position and/or orientation of the respective camera 31. In particular, by means of control device 55 it is possible to define and/or modify the area within inner environment 6, which, in use, may be inspected by camera 31.

Preferentially, each control device 55 is configured to control the position and/or orientation of the respective camera 31 in three dimensions.

According to some preferred non-limiting embodiments, each control device 55 is also configured to support the respective camera 31.

Moreover, control device 55 may be connected and/or coupled to the respective wall portion 30, in particular by means of a coupling plate 56 of the respective inspection system 8.

In more detail, each control device 55 comprises a first support portion 57 connected to the respective camera 31, in particular the respective main portion 34, and a second support portion 58 directly or indirectly (by means of the respective coupling plate 56) coupled to the respective wall portion 30.

Preferentially, each first support portion 57 is moveably, in particular angularly moveable around a rotation axis C, coupled to the respective second support portion 58.

Moreover, each control device 55 may comprise a respective coupling group 59 partially associated to the respective first support portion 57 and partially associated to the respective second support portion 58 and moveably coupling the respective first support portion 57 and the respective second support portion 58 to one another. In particular, coupling group 59 defines the respective rotation axis C.

Even more preferentially, each control device 55 comprises a locking unit 60 designed to lock and unlock the respective first support portion 57 for respectively impeding and allowing movement of the respective first support portion 57 with respect to the respective second support portion 58.

In more detail, each control device 55, in particular each second support portion 58, may comprise a position control group 61 designed to control a relative position of second support portion 58 with respect to the respective wall portion 30 (and the respective coupling plate 56).

In even more detail, each position control group 61 may be operatively connected to a main plate 62 of the respective second support portion 58, and in particular being designed to modify the position of main plate 62 with respect to the respective wall portion 30 (and the respective coupling plate 56). It should be noted that any modification of the position of main plate 62 results in a modification of the position of the respective first support portion 57.

According to some possible non-limiting embodiments, each position control group 61 may comprise a first bar 63 and a second bar 64 spaced apparat from one another and each one being connected to one respective portion of the respective main plate 62, in particular each one penetrating through a respective hole of the respective main plate 62.

Moreover, each first bar 63 and each second bar 64 is designed to contact and/or contacts a respective section of the respective wall portion 30 and/or the respective coupling plate 56.

Preferentially, each of the first bar 63 and second bar 64 is designed to allow for modification of the position of the respective portion of the main plate 62, in particular with respect to the respective wall portion 30 and/or the respective coupling plate 56. In particular, each of the first bar 63 and second bar 64 may allow for movement of the respective portion of the main plate 62 along the relative first bar 63 or the relative second bar 64.

Even more preferentially, each position control group 61 may also comprise a plurality of locking elements 65 for locking the position of the respective portion of the main plate 62.

This position control group 61 allows a very accurate adjustment of the position of the camera 31 with respect to the wall portion 30.

In use, article treatment apparatus 1 treats articles within inner environment 6 and inspection systems 8 inspect respective areas within inner environment 6.

According to the specific embodiment disclosed, article treatment apparatus 1 fills at least receptacles 2 with the pourable product by means of filling apparatus 13 and applies and fastens closures 3 onto receptacles 2 by means of capping apparatus 14 during advancement of receptacles 2 along respectively the filling portion P1 and the capping portion P2.

Additionally, article treatment apparatus 1 may also pre-heat precursors 4 by means of pre-heating apparatus 15 and/or to mold receptacles 2 from precursors 4 by means of molding apparatus 16.

Preferentially, the orientation and/or position of each camera 31 may be controlled by means of control device 55 prior and/or during operation of article treatment machine 1.

The configuration of the control device 55 offers a wide range of adjustment for adjusting the orientation and/or position of the camera 31 while optimizing the compactness.

The advantages of inspection system 8 and/or article treatment machine 1 according to the present invention will be clear from the foregoing description.

In particular, by having separation housing 29 protruding into inner environment 6 and by at least partially placing camera 31 within cavity 32, it is possible to visually inspect also difficult to access areas within inner environment 6.

Another advantage resides in the possibility to remove sensors, which e.g. may be associated to the filling unit, as e.g. the filling process becomes observable by means of camera 31, which previously required the use of specific sensors.

An even other advantage is seen in that the visual inspection can be done during operation of article treatment machine 1.

A further advantage resides in the possibility to move and orient camera 31 within cavity 32 so as to control the area to be observed within inner environment 6.

Clearly, changes may be made to inspection system 8 and/or article treatment machine 1 as described herein without, however, departing from the scope of protection as defined in the accompanying claims.

## Claims

1. Article treatment machine for the packaging of pourable food products (1) comprising at least:
- an isolation chamber (5) separating an inner environment (6), in particular an inner sterile and/or aseptic and/or clean environment (6), from an outer environment (7);
- one or more treatment apparatuses (12, 13, 14, 15, 16) configured to treat the articles within the inner environment (6); and
- at least one inspection system (8) arranged outside the inner environment (7) which is mounted to the isolation chamber (5), wherein:
the inspection system (8) comprises at least a separation housing (29) mounted to the isolation chamber (5) and protruding into the inner environment (6);
wherein the separation housing (29) comprises a cavity (32) fluidically separated from the inner environment (6);
wherein the inspection system (8) further comprises a camera (31) at least partially arranged within the cavity (32) to inspect an area within the inner environment (6) through a transparent wall (39) in the protruding portion of the separation housing (29)

2. Machine according to claim 1, wherein the cavity (32) is in fluidic connection with the outer environment (7).

3. Machine according to claim 1 or 2, wherein the camera (31) comprises a lens portion (33) having an optical system and being partially arranged within the cavity (32).

4. Machine according to any one of the preceding claims, wherein the separation housing (29) comprises:
- a frame (37) having an opening (38); and
- the transparent wall (39), in particular a transparent glass wall, covering the opening (38);
wherein the camera (31) is placed within the cavity (32) such to inspect an area within the inner environment (6) through the transparent wall (39).

5. Machine according to claim 4, wherein the frame (37) comprises a rim (41) delimiting the opening (38);
wherein the rim (41) comprises an abutment surface (42) and the transparent wall (39) engages the abutment surface (42).

6. Machine according to claim 5, wherein the rim (41) comprises a groove and a gasket (47) arranged within the groove;
wherein the transparent wall (39) is pressed against the gasket (47).

7. Machine according to claim 5 or 6, wherein the separation housing (29) comprises a spacer (48) designed to be arranged between the transparent wall (39) and a wall portion (30) of the isolation chamber (5); in particular the spacer (48) is designed to exert a pressing force onto the transparent wall (39).

8. Machine according to any one of the preceding claims, wherein the inspection system further comprises a control device (55) coupled to the camera (31) and configured to control the position and/or orientation of the camera (31), in particular in three dimensions.

9. Machine according to claim 8, wherein the control device (55) comprises a first support portion (57) connected to the camera (31) and a second support portion (58) coupled to a respective wall portion (30) of the isolation chamber (5);
wherein the first support portion (57) is rotatable with respect to the second support portion (58).

10. Machine according to claim 9, wherein the control device (55) comprises a locking unit (60) designed to lock and unlock the first support portion (57) for respectively impeding and allowing relative movement of the first support portion (57) with respect to the second support portion (58).

11. Machine according to claim 10, wherein the second support portion (58) comprises a position control group (61) designed to control a relative position of the second support portion (58) with respect to the respective wall portion (30).

12. Machine according to claim 11, wherein the position control group (61) is connected to a main plate (62) of the second support portion (58);
wherein the position control group (61) comprises a first bar (63) and a second bar (64) spaced apparat from one another and each one being connected to one respective portion of the main plate (62);
wherein the first bar (63) and the second bar (64) are designed to allow for modification of the position of the respective portion of the main plate (62).

13. Machine according to any of the previous claims, wherein the isolation chamber (5) comprises a plurality of walls (19) delimiting the inner environment (6);
wherein the inspection system (8) is mounted to one respective wall portion (30) of the walls (19).

14. Machine according to any of the previous claims, wherein the separation housing (29) is mounted to an inner surface of isolation chamber (5).

## Patentansprüche

1. Artikelbehandlungsmaschine zum Verpacken von gießfähigen Lebensmittelprodukten (1), die mindestens Folgendes umfasst:
- eine Isolationskammer (5), die eine innere Umgebung (6), insbesondere eine innere sterile und/oder aseptische und/oder reine Umgebung (6), von einer äußeren Umgebung (7) trennt,
- eine oder mehrere Behandlungsvorrichtungen (12, 13, 14, 15, 16), die dazu ausgestaltet sind, die Artikel innerhalb der inneren Umgebung (6) zu behandeln, und
- mindestens ein außerhalb der inneren Umgebung (7) angeordnetes Inspektionssystem (8), das an der Isolationskammer (5) montiert ist, wobei:
das Inspektionssystem (8) mindestens ein Trenngehäuse (29) umfasst, das an der Isolationskammer (5) montiert ist und in die innere Umgebung (6) ragt,
wobei das Trenngehäuse (29) einen Hohlraum (32) umfasst, der fluidisch von der inneren Umgebung (6) getrennt ist, wobei das Inspektionssystem (8) ferner eine Kamera (31) umfasst, die mindestens teilweise in dem Hohlraum (32) angeordnet ist, um einen Bereich in der inneren Umgebung (6) durch eine transparente Wand (39) in dem vorragenden Abschnitt des Trenngehäuses (29) zu inspizieren.

2. Maschine nach Anspruch 1, wobei der Hohlraum (32) in Fluidverbindung mit der äußeren Umgebung (7) steht.

3. Maschine nach Anspruch 1 oder 2, wobei die Kamera (31) einen Linsenabschnitt (33) mit einem optischen System umfasst, der teilweise in dem Hohlraum (32) angeordnet ist.

4. Maschine nach einem der vorhergehenden Ansprüche, wobei das Trenngehäuse (29) Folgendes umfasst:
- einen Rahmen (37) mit einer Öffnung (38), und
- die transparente Wand (39), insbesondere eine transparente Glaswand, die die Öffnung (38) abdeckt,
wobei die Kamera (31) in dem Hohlraum (32) platziert ist, um einen Bereich in der inneren Umgebung (6) durch die transparente Wand (39) zu inspizieren.

5. Maschine nach Anspruch 4, wobei der Rahmen (37) einen Rand (41) umfasst, der die Öffnung (38) begrenzt, wobei der Rand (41) eine Anlagefläche (42) umfasst und die transparente Wand (39) die Anlagefläche (42) in Eingriff nimmt.

6. Maschine nach Anspruch 5, wobei der Rand (41) eine Nut und eine in der Nut angeordnete Dichtung (47) umfasst,
wobei die transparente Wand (39) gegen die Dichtung (47) gedrückt wird.

7. Maschine nach Anspruch 5 oder 6, wobei das Trenngehäuse (29) einen Abstandshalter (48) umfasst, der dazu ausgebildet ist, zwischen der transparenten Wand (39) und einem Wandabschnitt (30) der Isolationskammer (5) angeordnet zu werden, insbesondere wobei der Abstandshalter (48) dazu ausgebildet ist, eine Anpresskraft auf die transparente Wand (39) auszuüben.

8. Maschine nach einem der vorhergehenden Ansprüche, wobei das Inspektionssystem ferner eine Steuervorrichtung (55) umfasst, die an die Kamera (31) gekoppelt und dazu ausgestaltet ist, die Position und/oder Ausrichtung der Kamera (31), insbesondere in drei Dimensionen, zu steuern.

9. Maschine nach Anspruch 8, wobei die Steuervorrichtung (55) einen ersten Stützabschnitt (57), der mit der Kamera (31) verbunden ist, und einen zweiten Stützabschnitt (58), der an einen jeweiligen Wandabschnitt (30) der Isolationskammer (5) gekoppelt ist, umfasst,
wobei der erste Stützabschnitt (57) bezüglich des zweiten Stützabschnitts (58) drehbar ist.

10. Maschine nach Anspruch 9, wobei die Steuervorrichtung (55) eine Verriegelungseinheit (60) umfasst, die dazu ausgelegt ist, den ersten Stützabschnitt (57) zu verriegeln und zu entriegeln, um eine Relativbewegung des ersten Stützabschnitts (57) bezüglich des zweiten Stützabschnitts (58) zu verhindern bzw. zu gestatten.

11. Maschine nach Anspruch 10, wobei der zweite Stützabschnitt (58) eine Positionssteuergruppe (61) umfasst, die dazu ausgelegt ist, eine relative Position des zweiten Stützabschnitts (58) bezüglich des jeweiligen Wandabschnitts (30) zu steuern.

12. Maschine nach Anspruch 11, wobei die Positionssteuergruppe (61) mit einer Hauptplatte (62) des zweiten Stützabschnitts (58) verbunden ist,
wobei die Positionssteuergruppe (61) eine erste Stange (63) und eine zweite Stange (64) umfasst, die voneinander beabstandet und jeweils mit einem jeweiligen Abschnitt der Hauptplatte (62) verbunden sind,
wobei die erste Stange (63) und die zweite Stange (64) dazu ausgelegt sind, eine Modifikation der Position des jeweiligen Abschnitts der Hauptplatte (62) zu gestatten.

13. Maschine nach einem der vorhergehenden Ansprüche, wobei die Isolationskammer (5) eine Vielzahl von Wänden (19) umfasst, die die innere Umgebung (6) begrenzen,
wobei das Inspektionssystem (8) an einem jeweiligen Wandabschnitt (30) der Wände (19) montiert ist.

14. Maschine nach einem der vorhergehenden Ansprüche, wobei das Trenngehäuse (29) an einer Innenfläche der Isolationskammer (5) montiert ist.

## Revendications

1. Machine de traitement d'articles pour le conditionnement de produits alimentaires versables (1) comprenant au moins :
- une chambre d'isolation (5) séparant un environnement intérieur (6), en particulier un environnement intérieur stérile et/ou aseptique et/ou propre (6), d'un environnement extérieur (7) ;
- un ou plusieurs appareils de traitement (12, 13, 14, 15, 16) conçus pour traiter les articles à l'intérieur de l'environnement intérieur (6) ; et
- au moins un système d'inspection (8) placé à l'extérieur de l'environnement intérieur (7) qui est installé sur la chambre d'isolation (5), dans laquelle :
le système d'inspection (8) comprend au moins un boîtier de séparation (29) installé sur la chambre d'isolation (5) et faisant saillie dans l'environnement intérieur (6) ;
dans laquelle le boîtier de séparation (29) comprend une cavité (32) séparée sur le plan fluidique de l'environnement intérieur (6) ;
dans laquelle le système d'inspection (8) comprend, en outre, une caméra (31) au moins partiellement placée à l'intérieur de la cavité (32) pour inspecter une zone à l'intérieur de l'environnement intérieur (6) à travers une paroi transparente (39) dans la partie saillante du boîtier de séparation (29).

2. Machine selon la revendication 1, dans laquelle la cavité (32) est en liaison fluidique avec l'environnement extérieur (7).

3. Machine selon la revendication 1 ou 2, dans laquelle la caméra (31) comprend une partie objectif (33) comportant un système optique et étant partiellement placée à l'intérieur de la cavité (32).

4. Machine selon l'une quelconque des revendications précédentes, dans laquelle le boîtier de séparation (29) comprend :
- un cadre (37) comportant une ouverture (38) ; et
- la paroi transparente (39), en particulier une paroi transparente en verre, couvrant l'ouverture (38) ;
dans laquelle la caméra (31) est placée à l'intérieur de la cavité (32) de façon à inspecter une zone à l'intérieur de l'environnement intérieur (6) à travers la paroi transparente (39).

5. Machine selon la revendication 4, dans laquelle le cadre (37) comprend un rebord (41) délimitant l'ouverture (38) ;
dans laquelle le rebord (41) comprend une surface d'appui (42) et la paroi transparente (39) vient s'appliquer contre la surface d'appui (42).

6. Machine selon la revendication 5, dans laquelle le rebord (41) comprend une rainure et un joint d'étanchéité (47) placé à l'intérieur de la rainure ;
dans laquelle la paroi transparente (39) est pressée contre le joint d'étanchéité (47).

7. Machine selon la revendication 5 ou 6, dans laquelle le boîtier de séparation (29) comprend une entretoise (48) conçue pour être placée entre la paroi transparente (39) et une partie de paroi (30) de la chambre d'isolation (5) ; en particulier l'entretoise (48) est conçue pour exercer une force de pression sur la paroi transparente (39).

8. Machine selon l'une quelconque des revendications précédentes, dans laquelle le système d'inspection comprend, en outre, un dispositif de réglage (55) accouplé à la caméra (31) et conçu pour régler la position et/ou l'orientation de la caméra (31), en particulier en trois dimensions.

9. Machine selon la revendication 8, dans laquelle le dispositif de réglage (55) comprend une première partie de support (57) raccordée à la caméra (31) et une seconde partie de support (58) accouplée à une partie de paroi respective (30) de la chambre d'isolation (5) ;
dans laquelle la première partie de support (57) est rotative par rapport à la seconde partie de support (58).

10. Machine selon la revendication 9, dans laquelle le dispositif de réglage (55) comprend une unité de blocage (60) conçue pour bloquer et débloquer la première partie de support (57) pour empêcher et permettre, respectivement, un mouvement relatif de la première partie de support (57) par rapport à la seconde partie de support (58).

11. Machine selon la revendication 10, dans laquelle la seconde partie de support (58) comprend un ensemble de réglage de position (61) conçu pour régler une position relative de la seconde partie de support (58) par rapport à la partie de paroi respective (30).

12. Machine selon la revendication 11, dans laquelle l'ensemble de réglage de position (61) est raccordé à une plaque principale (62) de la seconde partie de support (58) ;
dans laquelle l'ensemble de réglage de position (61) comprend une première barre (63) et une seconde barre (64) espacées l'une de l'autre et raccordées chacune à une partie respective de la plaque principale (62) ;
dans laquelle la première barre (63) et la seconde barre (64) sont conçues pour permettre une modification de la position de la partie respective de la plaque principale (62).

13. Machine selon l'une quelconque des revendications précédentes, dans laquelle la chambre d'isolation (5) comprend une pluralité de parois (19) délimitant l'environnement intérieur (6) ;
dans laquelle le système d'inspection (8) est installé sur une partie de paroi respective (30) des parois (19).

14. Machine selon l'une quelconque des revendications précédentes, dans laquelle le boîtier de séparation (29) est installé sur une surface intérieure de la chambre d'isolation (5).
